# EUROPEAN PATENT SPECIFICATION

(11) **EP 4 390 822 B1**
(45) Date of publication and mention of the grant of the patent: **29.10.2025**
(21) Application number: 23219381.3
(22) Date of filing: 21.12.2023
(51) Int. Cl.: G06Q 30/016, H04M 3/42, H04M 3/51, G06F 40/30

(54) **SYSTEMS AND METHODS FOR EVENT DRIVER DETECTION**
SYSTEME UND VERFAHREN ZUR EREIGNISTREIBERERKENNUNG
SYSTÈMES ET PROCÉDÉS DE DÉTECTION DE PILOTE D'ÉVÉNEMENT

(30) Priority: 23.12.2022 US 202218088494
(43) Date of publication of application: 26.06.2024
(73) Proprietor: Calabrio, Inc., Minneapolis, MN 55401 (US)
(72) Inventor: BULLOCK, Catherine, Minneapolis, MN 55405 (US); MORGAN, Dylan, Minneapolis, MN 55401 (US); CATTANEO, Laura, Rochester, MN 55902 (US); VANCIU, Chris, Isle, MN 56342 (US); CHAPLIN, Boris, Medina, MN 55340 (US)
(74) Representative: Marks & Clerk LLP

(56) References cited:
- WO-A2-2021/108454
- US-A1- 2010 184 402
- US-A1- 2021 160 371
- US-A1- 2022 210 268
- US-A1- 2022 391 591

## Description

### BACKGROUND

Determining inferences from communication data may typically be a manual process requiring significant time and resources. For example, manual categorization of call content may be inefficient and error-prone, among other detriments. Further, the volume of communications and subjectivity as to such categorization may make it difficult to accurately identify trends, address inefficiencies, and/or compare the effectiveness of changes over time, among other examples.

It is with respect to these and other general considerations that embodiments have been described. Also, although relatively specific problems have been discussed, it should be understood that the embodiments should not be limited to solving the specific problems identified in the background. US 2021/160371 A relates to a root behavior tree stored with a flow control node. US 2022/391591 A1 relates to using trained summarization models to determine topics of communication transcripts.

### SUMMARY

Aspects of the present disclosure relate to systems and methods for event driver detection from communication data (e.g., which may include a stream of text, an image, and audio stream, and/or a video stream). In examples, an event is identified for a communication. For example, the event may be a system-driven event, a context-driven event, or a conversation-driven event. One or more segments of communication data (e.g., an utterance, a sentence, or a sentence fragment) relating to the event may be identified, such that a topic may be determined for each segment. The determined topic(s) may be associated with the event, thereby determining an event driver for the event that provides an indication as to why the event occurred. Multiple communications (e.g., having the same or a similar event type, agent, supervisor, time period, and/or queue) may be aggregated, such that patterns/trends for corresponding event drivers may be identified and further processed accordingly.

This Summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following Figures.
Figure 1 illustrates an overview of an example system for event driver analysis according to aspects described herein.
Figure 2 illustrates an overview of an example method for determining an event driver according to aspects described herein.
Figure 3 illustrates an overview of an example method for processing a set of event drivers that were identified according to aspects described herein.
Figure 4 illustrates an overview of an example operating environment in which one or more aspects of the present application may be implemented.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems, or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

In examples, a variety of events may occur when an individual communicates with a contact center. For example, a call may be placed on hold or escalated to a higher-level agent, the individual may express frustration or request to speak to a supervisor, or the individual may endure a long pause in the conversation. These and other events may not only waste contact center resources, but may also result in a diminished user experience and, as a result, decreased user satisfaction. While such events may be likely to occur in certain instances, they may be avoidable in other instances (e.g., through potential system and/or process improvements). However, determining a cause or "event driver" for such events may be difficult, especially due to the subjective nature of conversation topics (e.g., that precede such an event) and instances where a contact center receives a high volume of communications, such that manual evaluation of events and associated causes is not practical.

Accordingly, aspects of the present disclosure relate to systems and methods for event driver detection from communication data (e.g., which may include a stream of text, an image, and audio stream, and/or a video stream). In examples, an event is identified for a communication. For example, the event may be a system-driven event, a context-driven event, or a conversation-driven event, as discussed in greater detail below. One or more segments of communication data (e.g., an utterance, a sentence, or a sentence fragment) relating to the event may be identified, such that a topic may be determined for each segment. The determined topic(s) may be associated with the event, thereby determining an event driver that provides an indication as to why the event occurred. Multiple communications (e.g., having the same or a similar event type, agent, supervisor, time period, and/or queue) may be aggregated, such that patterns/trends for corresponding event drivers may be identified accordingly.

As noted above, a variety of event types may be identified for a given communication based on conversation data (e.g., a recording and/or a transcript) and/or associated metadata (e.g., as may be generated by contact center operations software), among other examples. For example, a system-driven event may be identified, which may include an event relating to the structure of a communication (e.g., a hold event or a termination event). As another example, a context-driven event may be identified, which may include an event that relates to content of the communication (e.g., a request to escalate the communication and/or a suggestion of legal action. As a further example, a conversation-driven event may be identified, which may include an event that relates to a feature of human conversation (e.g., a long pause, silence, or a talk-over event). While example event types are described herein, any number of additional or alternative event types may be used in other examples.

In examples, a recording, a transcript, and/or any of a variety of other communication data for a communication is processed using a trained topic identification model (e.g., a machine learning model) to determine one or more topics therein, thereby generating feature data. As noted above, the communication data may be segmented into one or more segments. The topic identification machine learning model may process a segment of communication data as input and may thus output one or more features that represent the segment of communication data. In examples, a topic is associated with a set of features, which may thus guide the topic identification model to identify one or more topics that correspond to the segment of communication data. In some examples, density-based clustering may be used to associate topics to features and/or to identify topic(s) mentioned in a segment of communication data.

As will be appreciated, a topic may be generic, industry-specific, company-specific, customer-specific, region-specific, season-specific, culture-specific, and/or language-specific. In certain examples, a topic may be represented by a set of keywords, which may be keywords that are related to the topic. The set of keywords may be determined using word comparison and stemming, such that the keywords that are close in meaning but are potentially still different from one another may be selected as the set of keywords to represent a topic. That is, the set of keywords may be conceptually salient but not textually similar to each other. Such topic labeling mechanisms may help prevent or otherwise reduce instances where communications related to the same topic are artificially categorized into multiple similarly or relatedly named topics. In some examples, manual intervention may be used to further improve identifying and/or labeling of topics. Additionally, or alternatively, the set of keywords may include one or more phrases that are representative of a topic.

While example topic classification techniques are described, it will be appreciated that any of a variety of additional or alternative techniques may be used in other examples. Further, one of skill in the art will appreciate that many different levels of segmentation granularity can be used in conjunction with the aspects disclosed herein without departing from the scope of this disclosure. Additionally, while examples are provided in the context of textual or audio content, one of skill in the art will appreciate that the techniques disclosed herein may be employed when working with other content formats, such as images, video, etc.

As noted above, one or more segments of communication data may be identified for a given event, such that associated topic(s) are determined for the segments accordingly. For example, a sentence preceding an event may be identified and processed to determine an associated topic accordingly. In some examples, the identified sentence is a sentence that was communicated by a caller or other party (as compared to an agent that is party to the communication). Callers, agents, or other parties may each have an associated device via which they communicate and may each also be referred to herein as a "source". As another example, the identified sentence is a sentence that was communicated by the agent. In some instances, multiple sentences are identified, which may be associated with a caller, an agent, or any combination thereof. In other examples, a different level of segmentation granularity is used. While examples are described in which one or more communication segments prior to the given event are processed, it will be appreciated that, in other examples, at least one communication segment subsequent to the given event may be evaluated.

In some examples, the number of segments, segmentation granularity level, and/or parties for which segments are identified may vary. For example, a first event type may have a first associated number of segments, first segmentation granularity level, and/or a first set of parties, while a second event type may have a second associated number of segments, a second segmentation granularity level, and/or a second set of parties. Such aspects may vary depending on whether the event is a system-driven event, a context-driven event, or a conversation-driven event. In other examples, such aspects vary for events within or across these and/or other such event categories.

A topic that is determined for a communication segment may be associated with an event of a communication, thereby indicating an event driver for the event. The topic may be associated with the event in a communication data store, which, in some examples, may also store at least a part of the communication data for the communication. It will be appreciated that a communication may have any number of associated events, each of which may have one or more corresponding event drivers. In instances where multiple topics are identified for a given event, clustering or other aggregation techniques may be used (e.g., based on feature vectors for the identified topics) to summarize or otherwise aggregate the identified topics. As another example, cluster analysis of topic labels may be performed to create hierarchical categories accordingly.

Event drivers may be analyzed to generate a recommended action, for example that is predicted to reduce the occurrence of a corresponding event type and/or to automatically change one or more aspects associated with contact center operations software (e.g., according to such a recommendation), among other examples. In some examples, a dashboard, a report, and/or a notification may be generated based on a determined event driver, which may include an indication as to one or more events, one or more corresponding event types, and/or a set of topics associated with the events. For instance, a dashboard or report may indicate a set of event drivers associated with a given event type, thereby enabling a user (e.g., an administrator or an agent) to evaluate one or more causes associated with past events. In an example, a graphic is generated based on a set of event drivers, such as a pie chart (e.g., illustrating a distribution of topics associated with a given event type and/or a distribution of event types for a given date range) or a line chart (e.g., illustrating one or more trends relating to event types and/or topics over time. In some instances, a comparison is performed, for example between multiple groups of agents (e.g., associated with different supervisors, queues, regions, and/or whether a group of agents is experienced/inexperienced) and/or different time periods (e.g., before implementing a change and after implementing the change), among other examples.

While example actions are described herein, it will be appreciated that any of a variety of additional or alternative actions may be performed based on a determined event driver in other examples. For instance, one or more event drivers that are generated according to aspects described herein may be imported into or otherwise processed by third-party business intelligence software. As another example, an indication of a determined event driver may be provided to an agent to which an associated communication is transferred, thereby enabling the agent to gain an understanding of context corresponding to the communication prior to or when handling the communication.

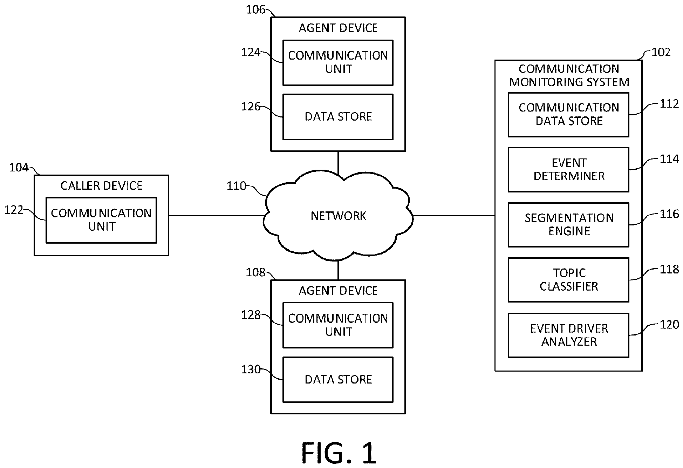

Figure 1 illustrates an overview of an example system 100 for event driver analysis according to aspects described herein. As illustrated, system 100 includes communication monitoring system 102, caller device 104, agent device 106, agent device 108, and network 110. In examples, communication monitoring system 102, caller device 104, agent device 106, and/or agent device 108 communicate via network 110. For example, network 110 may comprise a local area network, a wireless network, or the Internet, or any combination thereof, among other examples.

Communication monitoring system 102, caller device 104, agent device 106, and agent device 108 may each be any of a variety of computing devices, including, but not limited to, a distributed computing device (e.g., comprised of a set of computing devices that provide the functionality described herein), a mobile computing device, a laptop computing device, a tablet computing device, and/or a desktop computing device, among other examples.

It will be appreciated that, while system 100 is illustrated as comprising one communication monitoring system 102, one caller device 104, and two agent devices 106 and 108, any number of such elements may be used in other examples. Further, the functionality described herein may be distributed among or otherwise implemented on any number of different computing devices in any of a variety of other configurations in other examples.

Communication monitoring system 102 is illustrated as comprising communication data store 112, event determiner 114, segmentation engine 116, topic classifier 118, and event driver analyzer 120. Communication monitoring system 102 may obtain communication data, determine an event for the communication data, segment communication data into segments, determine associated topic(s) for the data segment(s), associate the topic(s) with the event as event driver(s), and evaluate the event drivers to perform any of a variety of actions according to aspects described herein.

Communication data store 112 may store communication data associated with communication between a plurality of sources, such as between agents and callers. In examples, communication data store 112 also stores associated metadata, including an indication as to when a communication started, when a communication ended, when a communication was placed on hold, when a communication was resumed, and/or when a communication was transferred, among other examples. An agent device (e.g., agent device 106 or 108) may include communication unit 124, 128 and data store 126, 130. Communication unit 124, 128 may enable an agent operating agent device 106, 108 to communicate with caller device 104, such as via a communication unit 122 of caller device 104. In examples, data store 126, 130 of agent device 106, 108 may store communication data at agent device 106, 108 as text data, audio data, and/or video data, among other examples. In certain examples, agent device 106, 108 is configured to transcribe audio data (e.g., from a phone call) and/or video data (e.g., from a video conference call) into text data before storing the communication data at data store 126, 130. In some examples, communication data stored at data store 126, 130 may be transmitted to communication data store 112 on demand, on a schedule, continuously, or in real-time or near real-time as new communication data are obtained. In some instances, data store 126, 130 at agent device 106, 108 may be configured to store only recent communication data, such as by implementing an auto-delete function once communication data are transmitted to communication data store 112. Communication data store 112, in contrast, may store both historic and current communication data obtained from agent device 106, 108.

Event determiner 114 may identify one or more events associated with communication data (e.g., for a communication between a caller of caller device 104 and an agent of agent device 106 or 108, as may be obtained from communication data store 112). In examples, event determiner 114 identifies system-driven events, context-driven events, and/or conversation-driven events. Event determiner 114 may identify an event based on communication data (e.g., as a result of evaluating content therein) and/or based on associated metadata. As an example, the communication data includes a transcript that is processed by event determiner 114 to identify an event (e.g., based on a phrase and/or a set of keywords, as well as, in some examples, an associated sentiment). As another example, the communication metadata includes an indication as to one or more system-driven events, such that event determiner 114 identifies such events accordingly. It will therefore be appreciated that event determiner 114 may evaluate these and/or other event types using any of a variety of techniques.

Segmentation engine 116 may segment communication data (e.g., as may be stored at communication data store 112) into one or more segments. For example, segmentation engine 116 generates one or more segments that correspond to an event that was identified by event determiner 114. In examples, the generated segments include an utterance, a sentence, and/or a sentence fragment, among other levels of segmentation granularity. As noted above, segmentation engine 116 may generate any number of segments based on the communication data, which may depend on the type of event that was determined by event determiner 114 in some examples. For example, segmentation engine 116 may generate segments only for a caller, for an agent, or for any combination thereof.

Accordingly, topic classifier 118 determines a topic for one or more segments of communication data that were generated by segmentation engine 116. For example, topic classifier 118 may process each segment using a trained topic identification model to determine one or more topics therein, thereby generating feature data corresponding to the segment. In certain examples, the topic determined by topic classifier 118 may be represented by a set of keywords, which may be the keywords that are related to the topic. Such aspects may help prevent or otherwise reduce instances where communications of the same topic are artificially categorized into multiple similarly or relatedly named topics. While example topic classification techniques are described, it will be appreciated that any of a variety of additional or alternative techniques may be used in other examples.

Communication monitoring system 102 is further illustrated as including event driver analyzer 120, which may associate one or more topics determined by topic classifier 118 with an event that was determined by event determiner 114. For example, the topic(s) and the event may be associated in communication data store 112, thereby generating an event driver that may further be processed according to aspects described herein (e.g., by event driver analyzer 120 and/or any of a variety of third-party software). In instances where multiple segments are determined to have multiple associated topics, event driver analyzer 120 may cluster the identified topics, so as to effectively summarize the topics of multiple segments into a single topic or set of keywords, among other examples.

Event driver analyzer 120 may aggregate and analyze event drivers (e.g., from communication data store 112, as may have been generated as described above) according to any of a variety of criteria. For example, event driver analyzer 120 may identify event drivers associated with a given event type, period of time, queue (e.g., via which one or more communications were received by agent device 106, 108), region, agent, and/or group of agents (e.g., experienced agents, inexperienced agents, and/or those associated with a given supervisor), among other criteria. The identified event drivers may be used to generate a dashboard, a report, and/or a notification, which may be provided to a computing device for display to a user (e.g., an administrator or a supervisor).

For example, the dashboard may provide an indication as to one or more event types and associated topics with which the event types are associated, thereby providing an indication to the user as to a set of event drivers for the event types. The associated topics may be depicted using a graphic, such as a pie chart, to provide a visual representation of the topics and each corresponding contribution to the event type. As another example, a graphic, such as a line chart, may be generated to provide a visual representation of the occurrence of an event type over time and/or the corresponding topics that relate to a given event over time, among other examples.

In some instances, event driver analyzer 120 generates a recommendation and/or implements a change to communication monitoring system 102, agent device 106, and/or agent device 108 (e.g., automatically, in response to a user accepting a generated recommendation, or based on an indication of a different change that is received from a user). For example, event driver analyzer 120 may determine that the occurrence of an event type and/or an associated topic exceeds a predetermined threshold, at which point event driver analyzer 120 may generate an electronic message to an agent of agent device 106 and/or 108 that instructs the agent to engage in additional training that relates to one or more topics. As another example, event driver analyzer 120 may determine to change a queue to which incoming communications are directed and/or change a structure of a tree with which incoming communications are handled, among other examples. It will therefore be appreciated that event driver analyzer 120 may generate analytics (e.g., dashboards, reports, notifications) and/or recommendations, as well as automatically adapt aspects of the communication system according to aspects described herein, among other examples.

As another example, output generated by event driver analyzer 120 may be provided to an agent device, thereby providing an indication to the agent as to why a communication transfer occurred (e.g., from agent device 106 to agent device 108, such that agent device 108 may display the output to the agent of agent device 108). While example output and/or processing is described, it will be appreciated that any of a variety of alternative or additional processing may be performed in other examples.

As noted above, the functionality described with respect to various elements of system 100 may be distributed according to any of a variety of other paradigms in other examples. In some instances, at least some of the functionality described above with respect to communication monitoring system 102 may be implemented by an agent device 106, 108. For instance, agent device 106, 108 may incorporate aspects of event determiner 114, such that communication data provided to communication data store 112 by agent device 106, 108 is further stored in association with events that were determined by agent device 106, 108. Aspects of topic classifier 118 may similarly be additionally or alternatively be implemented by agent device 106, 108 in other examples.

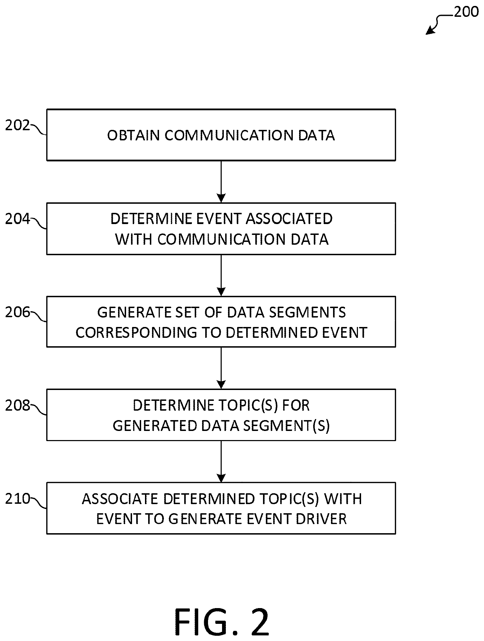

Figure 2 illustrates an overview of an example method 200 for determining an event driver according to aspects described herein. In examples, aspects of method 200 are performed by a communication monitoring system, such as communication monitoring system 102 in Figure 1. In some examples, aspects of method 200 may be performed contemporaneously with an ongoing communication (e.g., between a caller device and an agent device, such as caller device 104 and agent device 106, 108). As another example, aspects of method 200 are performed once a communication has concluded and/or according to a predetermined schedule, among other examples.

Method 200 begins at operation 202, where communication data is obtained. For example, the communication data may be obtained from a communication data store, such as communication data store 112 discussed above with respect to Figure 1. As another example, the communication data is obtained from an agent device (e.g., agent device 106, 108). The communication data may include a recording, transcribed audio data, and/or transcribed video data, among other examples. Communication data may be obtained on demand, on schedule, continuously, or in real-time or near real-time (e.g., as new data is captured by agent devices).

At operation 204, an event associated with the communication data is determined. In examples, aspects of operation 204 are performed by an event determiner, such as event determiner 114 in Figure 1. For example, operation 204 may comprise evaluating the communication data and/or metadata associated with the communication data (e.g., as may have been generated by a communication unit of an agent device, such as communication unit 124, 128 in Figure 1). As an example, a transcript of the obtained communication data may be processed at operation 204 to identify an event based on a phrase and/or a set of keywords, which may, in some examples, further have a corresponding a sentiment (e.g., as part of an associated context). Additionally, or alternatively, communication metadata (e.g., as may include an indication as to one or more system-driven events) is evaluated to identify one or more such events accordingly. While example event types are described, it will be appreciated that any of a variety of additional or alternative events may be determined in other examples.

Method 200 progresses to operation 206, where a set of data segments corresponding to the determined event is generated. In examples, aspects of operation 206 are performed by a segmentation engine, such as segmentation engine 116 in Figure 1. As noted above, any number of data segments, each having an associated level of segmentation granularity, may be generated. In some instances one or more segments are matched to an event based on a timestamp for the event and a timestamp corresponding to the segments (e.g., from a transcript). For instance, the quantity and/or granularity of the generated segments may depend on the event type that was determined at operation 204. Operation 206 may comprise generating one or more segments for a caller, for an agent, or any combination thereof, which, in some examples, may similarly depend on the type of event that was determined at operation 204.

Flow progresses to operation 208, where a topic is determined for each of the data segments that were generated at operation 206. In examples, aspects of operation 206 are performed by a topic classifier, such as topic classifier 118 in Figure 1. In examples, operation 206 comprises evaluating each segment using a trained topic identification model according to aspects described herein. As a result, each of the generated segments may have an associated set of keywords that summarize or otherwise indicate a topic therein. In instances where multiple data segments were generated at operation 206, operation 208 may further comprise aggregating or otherwise summarizing multiple topics (e.g., as was generated for each of the multiple data segments). For example, clustering or other aggregation techniques may be used to summarize the multiple topics accordingly. While example techniques are described for topic classification and summarization, it will be appreciated that any of a variety of additional or alternative techniques may be used in other examples.

At operation 210, the topic(s) that were determined at operation 208 are associated with the event that was determined at operation 204, thereby generating an event driver according to aspects described herein. Aspects of operation 210 may be performed by an event driver analyzer, such as event driver analyzer 120 in Figure 1. In examples, the event and the topic(s) are associated within a communication data store, such as communication data store 112 in Figure 1. For example, the event and/or topic(s) may be associated with the communication data for which they were determined (e.g., as may have been obtained at operation 202). In other examples, the event and/or topic(s) are associated separately from the communication data, as may be the case when the communication data is instead retained by an agent device (e.g., agent device 106, 108 in Figure 1).

As a result of operation 210, the generated event driver (e.g., comprising an association between the event and the topic(s)) may be used in any of a variety of subsequent processing, examples of which are described herein. As another example, the event driver may be exported or otherwise provided to a third-party application for subsequent processing. It will therefore be appreciated that the resulting event driver may be stored using any of a variety of techniques. Method 200 terminates at operation 210.

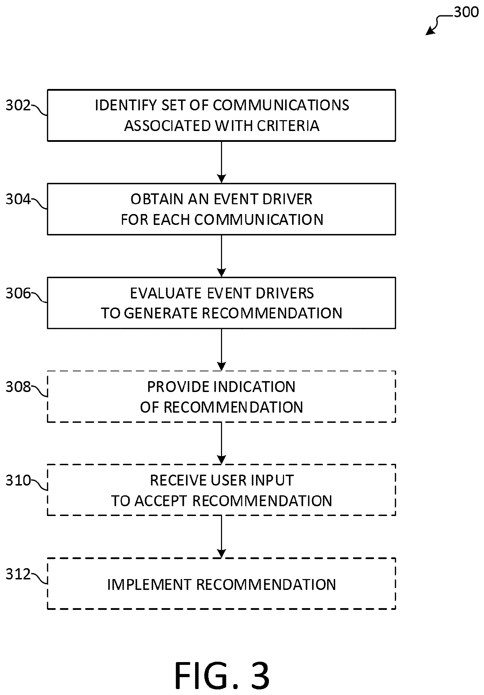

Figure 3 illustrates an overview of an example method 300 for processing a set of event drivers that were identified according to aspects described herein. In examples, aspects of method 300 may be performed by an event driver analyzer, such as event driver analyzer 120 in Figure 1. For example, method 300 may be performed to process one or more event drivers that was generated according to method 200, as was discussed above with respect to Figure 2.

Method 300 begins at operation 302, where a set of communications are identified associated with criteria. Example criteria include, but are not limited to, an event type, a period of time (e.g., a day, a week, a date range), a queue, a region, an agent, and/or a group of agents, among other criteria. In examples, the set of communications are identified from a communication data store, such as communication data store 112 in Figure 1.

At operation 304, an event driver is obtained for each of the identified communications. In examples, the event driver is stored in association with communication data for the communication (e.g., in a communication data store). In other examples, operation 304 comprises generating an event driver for at least a part of the communications that were identified at operation 302 (e.g., according to aspects of method 200 in Figure 2). Thus, it will be appreciated that event drivers may be pre-generated or may be generated on demand, among other examples. As noted above, each event driver includes an event of a certain event type and one or more associated topics.

Flow progresses to operation 306, where the event drivers that were obtained at operation 304 are evaluated to generate a recommendation accordingly. As noted above, operation 306 may comprise generating a recommended action, which is predicted to reduce the occurrence of a corresponding event type for the identified set of communications. For example, the recommended action may include additional or different agent training or reconfiguring one or more aspects of contact center operations software for which the communication data was obtained.

At operation 308, an indication of the recommendation is provided. For example, the recommendation may be provided to a computing device of a user (e.g., an administrator or an agent). Accordingly, at operation 310, an indication of user input to accept the recommendation is received. Thus, method 300 is illustrated as an example in which one or more recommendations (e.g., as were generated at operation 306) are provided for confirmation (or, in other examples, modification by the user). Operations 308 and 310 are illustrated using dashed boxes to indicate that, in other examples, they may be omitted (e.g., as may be the case when method 300 automatically implements one or more recommendations that are generated at operation 306).

Flow progresses to operation 312, where the recommendation that was generated at operation 306 is implemented. For example, an electronic message may be transmitted to one or more agents that includes training for the agents. As another example, contact center operations software may be reconfigured according to the generated recommendation. In some instances, the user input that is received at operation 310 may be different from the recommendation that was generated at operation 306 and may thus indicate a different action. As a result, operation 312 may instead implement the different action accordingly. Thus, it will be appreciated that any of a variety of actions may be performed at operation 312 to implement a recommendation accordingly.

It will be appreciated that, while method 300 is described as an example in which a recommendation is generated (e.g., at operation 306) based on event drivers associated with a set of communications and implemented (e.g., at operation 312), similar aspects may be used to perform any of a variety of additional or alternative actions, including, but not limited to, generating a dashboard, a report, and/or a notification, among other examples. Further, similar to operations 308 and 310, operation 312 may be optional and may therefore be omitted in some examples. Method 300 terminates at operation 312.

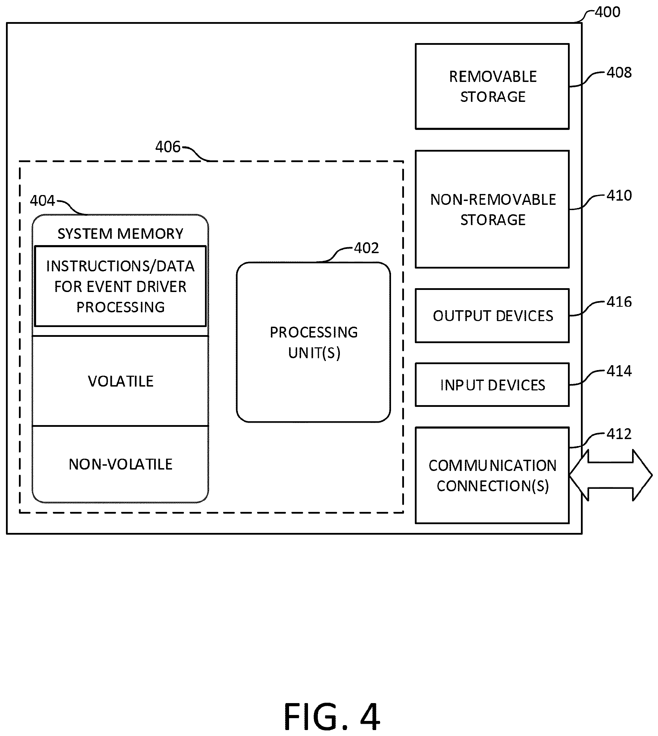

Figure 4 illustrates a simplified view of an example operating environment 400 in which one or more of the present embodiments may be implemented. This is only one example of a suitable operating environment and is not intended to suggest any limitation as to the scope of use or functionality. Other well-known computing systems, environments, and/or configurations that may be suitable for use include, but are not limited to, personal computers, server computers, handheld or laptop devices, multiprocessor systems, microprocessor-based systems, programmable consumer electronics such as smart phones, network PCs, minicomputers, mainframe computers, distributed computing environments that include any of the above systems or devices, and the like.

In its most simplified configuration, operating environment 400 typically may include at least one processing unit 402 and memory 404. Depending on the exact configuration and type of computing device, memory 404 (storing, among other things, APIs, programs, etc. and/or other components or instructions to implement or perform the system and methods disclosed herein, etc.) may be volatile (such as RAM), non-volatile (such as ROM, flash memory, etc.), or some combination of the two. This most simplified configuration is illustrated in Figure 4 by dashed line 406. Further, environment 400 may also include storage devices (removable, 408, and/or non-removable, 410) including, but not limited to, magnetic or optical disks or tape. Similarly, environment 400 may also have input device(s) 414 such as a keyboard, mouse, pen, voice input, etc. and/or output device(s) 416 such as a display, speakers, printer, etc. Also included in the environment may be one or more communication connections, 412, such as LAN, WAN, point to point, etc.

Operating environment 400 may include at least some form of computer readable media. The computer readable media may be any available media that can be accessed by processing unit 402 or other devices comprising the operating environment. For example, the computer readable media may include computer storage media and communication media. The computer storage media may include volatile and nonvolatile, removable, and non-removable media implemented in any method or technology for storage of information such as computer readable instructions, data structures, program modules or other data. The computer storage media may include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other non-transitory medium, which can be used to store the desired information. The computer storage media may not include communication media.

The communication media may embody computer readable instructions, data structures, program modules, or other data in a modulated data signal such as a carrier wave or other transport mechanism and includes any information delivery media. The term "modulated data signal" may mean a signal that has one or more of its characteristics set or changed in such a manner as to encode information in the signal. For example, the communication media may include a wired media such as a wired network or direct-wired connection, and wireless media such as acoustic, RF, infrared and other wireless media. Combinations of the any of the above should also be included within the scope of computer readable media.

The operating environment 400 may be a single computer operating in a networked environment using logical connections to one or more remote computers. The remote computer may be a personal computer, a server, a router, a network PC, a peer device, or other common network node, and typically includes many or all of the elements described above as well as others not so mentioned. The logical connections may include any method supported by available communications media. Such networking environments are commonplace in offices, enterprise-wide computer networks, intranets, and the Internet.

The different aspects described herein may be employed using software, hardware, or a combination of software and hardware to implement and perform the systems and methods disclosed herein. Although specific devices have been recited throughout the disclosure as performing specific functions, one skilled in the art will appreciate that these devices are provided for illustrative purposes, and other devices may be employed to perform the functionality disclosed herein without departing from the scope of the disclosure.

As stated above, a number of program modules and data files may be stored in the system memory 404. While executing on the processing unit 402, program modules (e.g., applications, Input/Output (I/O) management, and other utilities) may perform processes including, but not limited to, one or more of the stages of the operational methods described herein such as the methods illustrated in Figures 2 or 3, for example.

Furthermore, examples of the disclosure may be practiced in an electrical circuit comprising discrete electronic elements, packaged or integrated electronic chips containing logic gates, a circuit utilizing a microprocessor, or on a single chip containing electronic elements or microprocessors. For example, examples of the disclosure may be practiced via a system-on-a-chip (SOC) where each or many of the components illustrated in Figure 4 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality described herein may be operated via application-specific logic integrated with other components of the operating environment 400 on the single integrated circuit (chip). Examples of the present disclosure may also be practiced using other technologies capable of performing logical operations such as, for example, AND, OR, and NOT, including but not limited to mechanical, optical, fluidic, and quantum technologies. In addition, examples of the disclosure may be practiced within a general-purpose computer or in any other circuits or systems.

As will be understood from the foregoing disclosure, one aspect of the technology relates to a system for generating an event driver, comprising: a processor; and a memory storing computer-executable instructions that, upon execution by the processor, causes the system to perform a set of operations. The set of operations comprises: obtaining communication data associated with a communication between a plurality of sources; determining an event for the communication; segmenting the communication data into a set of data segments, wherein each data segment of the set of data segments is associated with the determined event; determining, for each data segment of the set of data segments, a topic of the data segment, thereby generating a set of topics; and generating, in a communication data store, an association between the set of topics and the event, thereby generating an event driver for the event of the communication. In an example, the event is one of a system-driven event, a context-driven event, or a conversation-driven event. In another example, communication data is segmented into the set of data segments based on at least one of a quantity of data segments or a segmentation granularity associated with a type of the determined event. In a further example, the event is determined based on at least one of the communication data or metadata associated with the communication. In yet another example, the set of topics is generated by using a topic identification model to generate a topic for each data segment of the set of data segments. In a further still example, the set of operations further comprises: generating at least one of a notification, a dashboard, or a report based on the event driver; and providing an indication of the notification, the dashboard, or the report to a computing device. In an example, the communication data is obtained from the communication data store and includes a transcript of the communication.

In another aspect, the technology relates to a method for generating an event driver for communication data. The method comprises: obtaining a set of event drivers associated with one or more communications of a contact center, wherein each event driver of the set of event drivers includes an association between: an event of a conversation; and a topic for a segment of the conversation that preceded the event; generating, based on the set of event drivers, a report that includes: an event type for one or more events of the set of event drivers; and one or more topics that are associated with the one or more events; receiving an indication of user input associated with the report that includes an action; and implementing the action to affect operation of contact center operations software for the contact center. In an example, obtaining the set of event drivers comprises: obtaining communication data associated with a communication; determining, for one or more data segments of the communication data that are associated with an event of the communication, a topic; and generating an association between the determined topic and the event of the communication, thereby generating an event driver. In another example, the set of event drivers is obtained from a communication data store. In a further example, the event type is one of a system-driven event type, a context-driven event type, or a conversation-driven event type. In yet another example, the indication is received in response to a recommendation that was generated based on the set of event drivers. In a further still example, the set of event drivers is a first set of event drivers, and the report includes a comparison between the first set of event drivers and a second set of event drivers that are associated with a different time period than the first set of event drivers.

In a further aspect, the technology relates to a method for generating an event driver for communication data. The method comprises: obtaining communication data associated with a communication between a plurality of sources; determining an event for the communication; segmenting the communication data into a set of data segments, wherein each data segment of the set of data segments is associated with the determined event; determining, for each data segment of the set of data segments, a topic of the data segment, thereby generating a set of topics; and generating, in a communication data store, an association between the set of topics and the event, thereby generating an event driver for the event of the communication. In an example, the event is one of a system-driven event, a context-driven event, or a conversation-driven event. In another example, communication data is segmented into the set of data segments based on at least one of a quantity of data segments or a segmentation granularity associated with a type of the determined event. In a further example, the event is determined based on at least one of the communication data or metadata associated with the communication. In yet another example, the set of topics is generated by using a topic identification model to generate a topic for each data segment of the set of data segments. In a further still example, the method further comprises: generating at least one of a notification, a dashboard, or a report based on the event driver; and providing an indication of the notification, the dashboard, or the report to a computing device. In an example, the communication data is obtained from the communication data store and includes a transcript of the communication.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within broader aspects of the general inventive concept embodied in this application that do not depart from the broader scope of the claimed disclosure.

## Claims

1. A computer-implemented method for generating an event driver for communication data, the method comprising:
obtaining a set of event drivers associated with one or more communications of a contact center, wherein each event driver of the set of event drivers includes an association between:
an event of a conversation; and
a topic for a segment of the conversation that preceded the event, and wherein the association included in an event driver represents a cause for the event;
generating, based on the set of event drivers, a report that includes:
an event type for one or more events of the set of event drivers, wherein the set of event drivers is a first set of event drivers, and the report includes a comparison between the first set of event drivers and a second set of event drivers that are associated with a different time period than the first set of event drivers; and
one or more topics that are associated with the one or more events;
receiving an indication of user input associated with the report that includes an action; and
implementing the action to affect operation of contact center operations software for the contact center.

2. The computer-implemented method of claim 1, wherein obtaining the set of event drivers comprises:
obtaining communication data associated with a communication;
determining, for one or more data segments of the communication data that are associated with an event of the communication, a topic; and
generating an association between the determined topic and the event of the communication, thereby generating an event driver.

3. The computer-implemented method of claim 1 or 2, wherein the set of event drivers is obtained from a communication data store.

4. The computer-implemented method of claim 1, 2 or 3, wherein the event type is one of a system-driven event type, a context-driven event type, or a conversation-driven event type.

5. The computer-implemented method of any preceding claim, wherein the indication is received in response to a recommendation that was generated based on the set of event drivers.

6. A computer-implemented method for generating an event driver for communication data, the method comprising:
obtaining communication data associated with one or more communications between a plurality of sources;
determining an event for each communication;
segmenting the communication data into a set of data segments, wherein each data segment of the set of data segments is associated with the determined event;
determining, for each data segment of the set of data segments, a topic of the data segment, thereby generating a set of topics; and
generating, in a communication data store, an association between the set of topics and the event, thereby generating set of event drivers comprising an event driver for the event of the communication, wherein the event driver represents a cause for the event;
generating using the event driver, a recommended action, wherein the recommended action is predicted to reduce the occurrence of the determined event, and wherein the recommended action comprises a report that includes:
an event type for one or more events of the set of event drivers, wherein the set of event drivers is a first set of event drivers, and the report included a comparison between the first set of event drivers and a second set of event drivers that are associated with a different time period than the first set of event drivers; and
providing an indication of the notification, the dashboard, or the report to a computing device.

7. The computer-implemented method of claim 6, wherein the event is one of a system-driven event, a context-driven event, or a conversation-driven event.

8. The computer-implemented method of claim 6 or 7, wherein communication data is segmented into the set of data segments based on at least one of a quantity of data segments or a segmentation granularity associated with a type of the determined event.

9. The computer-implemented method of claim 6, 7 or 8, wherein the event is determined based on at least one of the communication data or metadata associated with the communication.

10. The computer-implemented method of any one of claims 6 to 9, wherein the set of topics is generated by using a topic identification model to generate a topic for each data segment of the set of data segments.

11. The computer-implemented method of any one of claims 6 to 10, wherein the communication data is obtained from the communication data store and includes a transcript of the communication.

12. A system for generating an event driver, comprising:
one or more processors; and
a memory storing computer-executable instructions that, upon execution by the one or more processors, causes the system to perform the method of any preceding claim.

13. A non-transitory computer readable medium storing computer readable instructions configured to cause one or more processors to perform the method of any one of claims 1 to 11.

## Patentansprüche

1. Computerimplementiertes Verfahren zum Generieren eines Ereignistreibers für Kommunikationsdaten, wobei das Verfahren Folgendes umfasst:
Erhalten eines Satzes von Ereignistreibern, die mit einer oder mehreren Kommunikationen eines Kontaktcenters verknüpft sind, wobei jeder Ereignistreiber des Satzes von Ereignistreibern eine Verknüpfung zwischen Folgendem beinhaltet:
einem Konversationsereignis; und
einem Thema für einen Abschnitt der Konversation, der dem Ereignis vorausging, und wobei die in einem Ereignistreiber beinhaltete Verknüpfung eine Ursache für das Ereignis darstellt;
Generieren eines Berichts basierend auf dem Satz von Ereignistreibern, der Folgendes beinhaltet:
einen Ereignistyp für ein oder mehrere Ereignisse aus dem Satz von Ereignistreibern, wobei der Satz von Ereignistreibern ein erster Satz von Ereignistreibern ist und der Bericht einen Vergleich zwischen dem ersten Satz von Ereignistreibern und einem zweiten Satz von Ereignistreibern beinhaltet, der mit einem anderen Zeitraum als der erste Satz von Ereignistreibern verknüpft ist; und
ein oder mehrere Themen, die mit dem einen oder den mehreren Ereignissen verknüpft sind;
Empfangen einer Anzeige einer mit dem Bericht verknüpften Benutzereingabe, die eine Aktion beinhaltet;
und
Implementieren der Aktion, um einen Betrieb von Kontaktcenter-Betriebssoftware für das Kontaktcenter zu beeinflussen.

2. Computerimplementiertes Verfahren nach Anspruch 1, wobei Erhalten des Satzes von Ereignistreibern Folgendes umfasst:
Erhalten von Kommunikationsdaten, die mit einer Kommunikation verknüpft sind;
Bestimmen eines Themas für ein oder mehrere Datensegmente der Kommunikationsdaten, die mit einem Ereignis der Kommunikation verknüpft sind; und
Generieren einer Verknüpfung zwischen dem bestimmten Thema und dem Ereignis der Kommunikation, wodurch ein Ereignistreiber generiert wird.

3. Computerimplementiertes Verfahren nach Anspruch 1 oder 2, wobei der Satz von Ereignistreibern aus einem Kommunikationsdatenspeicher erhalten wird.

4. Computerimplementiertes Verfahren nach Anspruch 1, 2 oder 3, wobei der Ereignistyp einer von einem systemgesteuerten Ereignistyp, einem kontextgesteuerten Ereignistyp oder einem konversationsgesteuerten Ereignistyp ist.

5. Computerimplementiertes Verfahren nach einem vorstehenden Anspruch, wobei die Anzeige als Reaktion auf eine Empfehlung empfangen wird, die basierend auf dem Satz von Ereignistreibern generiert wurde.

6. Computerimplementiertes Verfahren zum Generieren eines Ereignistreibers für Kommunikationsdaten, wobei das Verfahren Folgendes umfasst:
Erhalten von Kommunikationsdaten, die mit einer oder mehreren Kommunikationen zwischen einer Vielzahl von Quellen verknüpft sind;
Bestimmen eines Ereignisses für jede Kommunikation;
Segmentieren der Kommunikationsdaten in einen Satz von Datensegmenten, wobei jedes Datensegment des Satzes von Datensegmenten mit dem bestimmten Ereignis verknüpft ist;
Bestimmen eines Themas des Datensegments für jedes Datensegment des Satzes von Datensegmenten, wodurch ein Satz von Themen generiert wird; und
Generieren einer Verknüpfung zwischen dem Satz von Themen und dem Ereignis in einem Kommunikationsdatenspeicher, wodurch ein Satz von Ereignistreibern generiert wird, der einen Ereignistreiber für das Ereignis der Kommunikation umfasst, wobei der Ereignistreiber eine Ursache für das Ereignis darstellt;
Generieren einer empfohlenen Aktion unter Verwendung des Ereignistreibers, wobei die empfohlene Aktion voraussichtlich das Auftreten des bestimmten Ereignisses verringert, und wobei die empfohlene Aktion einen Bericht umfasst, der Folgendes beinhaltet:
einen Ereignistyp für ein oder mehrere Ereignisse aus dem Satz von Ereignistreibern, wobei der Satz von Ereignistreibern ein erster Satz von Ereignistreibern ist, und der Bericht einen Vergleich zwischen dem ersten Satz von Ereignistreibern und einem zweiten Satz von Ereignistreibern beinhaltet, der mit einem anderen Zeitraum als der erste Satz von Ereignistreibern verknüpft ist; und
Bereitstellen einer Anzeige der Benachrichtigung, des Dashboards oder des Berichts für eine Rechenvorrichtung

7. Computerimplementiertes Verfahren nach Anspruch 6, wobei das Ereignis eines von einem systemgesteuerten Ereignis, einem kontextgesteuerten Ereignis oder einem konversationsgesteuerten Ereignis ist.

8. Computerimplementiertes Verfahren nach Anspruch 6 oder 7, wobei Kommunikationsdaten in den Satz von Datensegmenten segmentiert werden, basierend auf mindestens einem von einer Menge von Datensegmenten und/oder Segmentierungsgranularität, die mit einem Typ des bestimmten Ereignisses verknüpft ist.

9. Computerimplementiertes Verfahren nach Anspruch 6, 7 oder 8, wobei das Ereignis basierend auf mindestens einen der mit der Kommunikation verbundenen Kommunikationsdaten oder Metadaten bestimmt wird.

10. Computerimplementiertes Verfahren nach einem der Ansprüche 6 bis 9, wobei der Satz von Themen unter Verwendung eines Themenidentifizierungsmodells generiert wird, um für jedes Datensegment des Satzes von Datensegmenten ein Thema zu generieren.

11. Computerimplementiertes Verfahren nach einem der Ansprüche 6 bis 10, wobei die Kommunikationsdaten aus dem Kommunikationsdatenspeicher erhalten werden und eine Abschrift der Kommunikation beinhalten.

12. System zum Generieren eines Ereignistreibers, umfassend:
einen oder mehrere Prozessoren; und
einen Speicher, welcher computerausführbare Anweisungen speichert, die, wenn sie von dem einen oder den mehreren Prozessoren ausgeführt werden, das System veranlassen, das Verfahren nach einem vorstehenden Anspruch durchzuführen.

13. Nichtflüchtiges computerlesbares Medium, das computerlesbare Anweisungen speichert, die so konfiguriert sind, dass sie einen oder mehrere Prozessoren dazu veranlassen, das Verfahren nach einem der Ansprüche 1 bis 11 auszuführen.

## Revendications

1. Procédé mis en œuvre par ordinateur pour générer un pilote d'événement pour des données de communication, le procédé consistant à :
obtenir un ensemble de pilotes d'événement associés à une ou plusieurs communications d'un centre de contact, dans lequel chaque pilote d'événement de l'ensemble de pilotes d'événement inclut une association entre :
un événement d'une conversation ; et
un sujet pour un segment de la conversation qui précédait l'événement, et dans lequel l'association incluse dans un pilote d'événement représente une cause de l'événement ;
générer, sur la base de l'ensemble de facteurs d'événement, un rapport qui inclut :
un type d'événement pour un ou plusieurs événements de l'ensemble de pilotes d'événement, dans lequel l'ensemble de pilotes d'événement est un premier ensemble de pilotes d'événement, et le rapport inclut une comparaison entre le premier ensemble de pilotes d'événement et un second ensemble de pilotes d'événement qui sont associés à une période de temps différente du premier ensemble de pilotes d'événement ; et
un ou plusieurs sujets qui sont associés à un ou plusieurs événements ;
recevoir une indication de l'entrée utilisateur associée au rapport qui inclut une action ;
et
mettre en œuvre l'action visant à affecter le fonctionnement du logiciel d'exploitation du centre de contact pour le centre de contact.

2. Procédé mis en œuvre par ordinateur selon la revendication 1, dans lequel l'obtention de l'ensemble de pilotes d'événement consiste à :
obtenir des données de communication associées à une communication ;
déterminer, pour un ou plusieurs segments de données des données de communication qui sont associés à un événement de la communication, un sujet ; et
générer une association entre le sujet déterminé et l'événement de la communication, générant ainsi un pilote d'événement.

3. Procédé mis en œuvre par ordinateur selon la revendication 1 ou 2, dans lequel l'ensemble de pilotes d'événement est obtenu à partir d'un magasin de données de communication.

4. Procédé mis en œuvre par ordinateur selon la revendication 1, 2 ou 3, dans lequel le type d'événement est un parmi un type d'événement piloté par le système, un type d'événement piloté par le contexte ou un type d'événement piloté par la conversation.

5. Procédé mis en œuvre par ordinateur selon l'une quelconque des revendications précédentes, dans lequel l'indication est reçue en réponse à une recommandation qui a été générée sur la base de l'ensemble de pilotes d'événement.

6. Procédé mis en œuvre par ordinateur pour générer un pilote d'événement pour des données de communication, le procédé consistant à :
obtenir des données de communication associées à une ou plusieurs communications entre une pluralité de sources ;
déterminer un événement pour chaque communication ;
segmenter les données de communication en un ensemble de segments de données, dans lequel chaque segment de données de l'ensemble de segments de données est associé à l'événement déterminé ;
déterminer, pour chaque segment de données de l'ensemble de segments de données, un sujet du segment de données, générant ainsi un ensemble de sujets ; et
générer, dans un magasin de données de communication, une association entre l'ensemble de sujets et l'événement, générant ainsi un ensemble de pilotes d'événement comprenant un pilote d'événement pour l'événement de la communication, dans lequel le pilote d'événement représente une cause de l'événement ;
générer, en utilisant le pilote d'événement, une action recommandée, dans lequel l'action recommandée est prévue pour réduire l'occurrence de l'événement déterminé, et dans lequel l'action recommandée comprend un rapport qui inclut :
un type d'événement pour un ou plusieurs événements de l'ensemble de pilotes d'événement, dans lequel l'ensemble de pilotes d'événement est un premier ensemble de pilotes d'événement, et le rapport incluait une comparaison entre le premier ensemble de pilotes d'événement et un second ensemble de pilotes d'événement qui sont associés à une période de temps différente du premier ensemble de pilotes d'événement; et
fournir une indication de la notification, du tableau de bord ou du rapport à un dispositif informatique.

7. Procédé mis en œuvre par ordinateur selon la revendication 6, dans lequel l'événement est un parmi un événement piloté par le système, un événement piloté par le contexte ou un événement piloté par la conversation.

8. Procédé mis en œuvre par ordinateur selon la revendication 6 ou 7, dans lequel des données de communication sont segmentées dans l'ensemble de segments de données sur la base d'au moins une quantité de segments de données ou d'une granularité de segmentation associée à un type de l'événement déterminé.

9. Procédé mis en œuvre par ordinateur selon la revendication 6, 7 ou 8, dans lequel l'événement est déterminé sur la base d'au moins une des données de communication ou métadonnées associées à la communication.

10. Procédé mis en œuvre par ordinateur selon l'une quelconque des revendications 6 à 9, dans lequel l'ensemble de sujets est généré en utilisant un modèle d'identification de sujet pour générer un sujet pour chaque segment de données de l'ensemble de segments de données.

11. Procédé mis en œuvre par ordinateur selon l'une quelconque des revendications 6 à 10, dans lequel les données de communication sont obtenues à partir du magasin de données de communication et incluent une transcription de la communication.

12. Système de génération d'un pilote d'événement, comprenant :
un ou plusieurs processeurs ; et
une mémoire stockant des instructions exécutables par ordinateur qui, lorsqu'elles sont exécutées par l'un ou les plusieurs processeurs, amène le système à mettre en œuvre le procédé selon une quelconque revendication précédente.

13. Support lisible par ordinateur non transitoire stockant des instructions lisibles par ordinateur configuré pour amener un ou plusieurs processeurs à mettre en œuvre le procédé selon l'une quelconque des revendications 1 à 11.
